# FASCICULE DE BREVET EUROPEEN

(11) **EP 1 388 711 B1**
(45) Date de publication et mention de la délivrance du brevet: **16.03.2011**
(21) Numéro de dépôt: 03292002.7
(22) Date de dépôt: 21.07.2003
(51) Int. Cl.: F21V 23/02, F21V 19/00, B60Q 1/04

(54) **Dispositif d'éclairage ou de signalisation équipé d'un module complémentaire pour véhicule automobile**
Beleuchtungs- oder Signalleuchte mit Zusatzmodul für Kraftfahrzeug
Illumination or signalling device with supplementary module for motor vehicle

(30) Priorité: 08.08.2002 FR 0210124
(43) Date de publication de la demande: 11.02.2004
(73) Titulaire: VALEO VISION, 93012 Bobigny Cedex (FR)
(72) Inventeur: Duarte, Marc, 93250 Villemomble (FR); Nicolai, Jean-Marc, 92400 Courbevoie (FR); Myotte, David, 93360 Neuilly Plaisance (FR)

(56) Documents cités:
- EP-A- 0 854 315
- EP-A- 1 136 749
- GB-A- 2 297 148
- JP-A- 2001 101 908

## Description

La présente invention a pour objet un dispositif d'éclairage ou de signalisation pour véhicules automobiles, ledit dispositif étant composé essentiellement d'un élément émetteur de lumière assemblé avec un module complémentaire se présentant sous la forme d'un boîtier. Le module complémentaire comporte un ensemble d'éléments électriques et/ou électroniques et/ou mécaniques destinés directement au fonctionnement de l'élément émetteur de lumière ou au fonctionnement de fonctions accessoires et/ou complexes associées à cet élément. Dans un exemple particulier et préféré de l'invention, qui sera plus particulièrement détaillé, le module complémentaire est un élément de type ballast.

L'invention a essentiellement pour but de proposer une réalisation particulière d'un assemblage de l'élément émetteur de lumière avec le module complémentaire ; cette réalisation présente des avantages notamment en terme de facilité d'assemblage de l'élément émetteur de lumière avec le module complémentaire, et accessoirement en terme d'encombrement du module complémentaire lorsqu'il est assemblé avec l'élément émetteur de lumière, de moules utilisés dans la réalisation de l'élément émetteur de lumière ou encore d'étanchéité à plusieurs niveaux du dispositif d'éclairage ou de signalisation.

Le domaine de l'invention est, d'une façon générale, celui des dispositifs d'éclairage ou de signalisation de véhicule automobile. Dans ce domaine, on connaît différents types de dispositifs, parmi lesquels on trouve de façon non limitative :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule roulant en sens inverse ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs perfectionnés, dits bi-fonction, qui cumulent les fonctions de feux de croisement et de feu de route en incorporant un cache amovible ;
- des projecteurs ou des feux anti-brouillard ;
- des feux de stop ;
- des indicateurs de changement de direction.

L'association, selon l'invention, entre un élément émetteur de lumière et un module complémentaire peut être effectuée avec l'un quelconque de ces dispositifs. Le module complémentaire peut en effet par exemple contenir une carte électronique de type carte LCS ( Light Control System en anglais, pour système de contrôle de l'éclairage), qui sert à la gestion de la mise en oeuvre de fonctions dites complexes (FBL, DBL, DRL, Cordy...) pour le dispositif auquel cette carte électronique est associée. Le module complémentaire peut également comporter une carte de contrôle pour piloter un élément mécanique de type actionneur. L'invention sera néanmoins plus particulièrement décrite dans le cadre d'un dispositif projecteur de type feu de croisement avec un module complémentaire de type ballast.

Dans le contexte de l'invention, un ballast est un module complémentaire particulier contenu de préférence dans un dispositif projecteur de type feu de croisement utilisant comme source lumineuse une lampe à décharge. Plus particulièrement, dans l'invention, on fait référence aux ballasts de type HID (High Intensity Discharge en anglais, pour décharge de haute intensité), qui sont nécessaires pour créer et maintenir un arc électrique utilisé dans les lampes à xénon. Un module électronique crée une haute tension au sein du ballast pour obtenir l'arc électrique au niveau de la source lumineuse utilisée. Dans ce type de projecteur, un module complémentaire de type ballast est donc indispensable pour fournir l'énergie nécessaire au bon fonctionnement du projecteur.

Cependant, l'intégration d'un tel module au sein du dispositif projecteur doit se faire en respectant un ensemble de contraintes :
- elle doit se faire au moyen d'une opération d'assemblage aussi simple que possible ;
- elle doit être peu encombrante;
- afin d'éviter tout endommagement des éléments contenus dans le ballast, elle doit tenir compte des fortes températures qui peuvent apparaître lors du fonctionnement du dispositif projecteur ;
- elle doit prendre en compte la nécessité des transmissions de signaux électriques entre les différents éléments du dispositif projecteur ;
- l'association entre l'élément projecteur et le module complémentaire ne doit pas entraîner de problèmes d'étanchéité pour l'une quelconque de ces pièces.

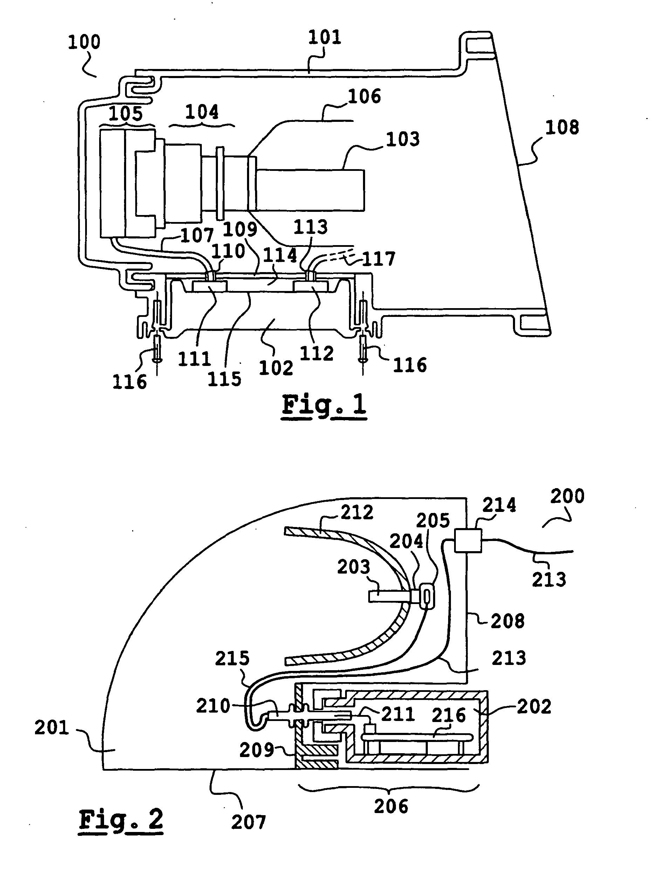

Dans l'état de la technique, on a proposé notamment un dispositif projecteur qui tente de respecter ces différentes contraintes. Un tel dispositif projecteur est illustré de façon schématique à la figure 1.

Sur cette figure, un dispositif projecteur 100 est essentiellement composé d'un élément projecteur 101 et d'un ballast 102 de type HID. Dans l'élément projecteur 101, on trouve notamment un réflecteur 106 dans lequel on a placé une source lumineuse 103, de type lampe à décharge. La source lumineuse 103 produit un faisceau lumineux qui sort de l'élément projecteur 101 au niveau d'une surface de sortie 108, qui constitue la partie avant de l'élément projecteur 101. La source lumineuse 103, qui repose sur un élément porte-lampe 104, est connectée à un module haute tension 105 servant à l'alimenter

Le module haute tension est alimenté au moyen d'un première liaison électrique 107, constituant un faisceau d'entrée, qui est de préférence blindée et qui sort de l'élément projecteur 101 au niveau d'une première ouverture, ménagée dans une face inférieure 109 de l'élément projecteur 101, dans laquelle on a disposé une première contrepartie 110 de connecteur. Cette première contrepartie 110 est destinée à recevoir un premier connecteur 111 du ballast 102. Ce dernier comporte un deuxième connecteur 112, associé à une deuxième contrepartie 113 de connecteur disposée au niveau d'une deuxième ouverture ménagée dans la face inférieure 109 de l'élément projecteur 101. Une deuxième liaison électrique 117, constituant un faisceau de sortie, est reliée au deuxième connecteur 112; elle permet d'acheminer différents signaux électriques, notamment un signal d'alimentation du ballast et différents signaux de contrôle provenant du véhicule.

La solidarisation entre le ballast 102 et l'élément projecteur 101 s'effectue entre la face inférieure 109 de l'élément projecteur 101 et une face supérieure 115 du ballast 102, au niveau d'un évidement 114 ménagé dans au moins une partie de la face inférieure et de la face arrière de l'élément projecteur 101, c'est à dire approximativement sous l'ensemble constitué par le réflecteur 106, l'élément porte-lampe 104 et le module haute tension 105. Le ballast 102 est fixé sur l'élément projecteur 101 au moyen d'au moins deux vis 116 qui viennent se disposer verticalement dans des ouvertures prévues à cet effet.

Le choix de la disposition du ballast 102 s'effectue notamment en considérant la zone la moins chaude du dispositif projecteur. Généralement, cette zone correspond à la zone située sous l'élément réflecteur 101, qui par ailleurs est assez accessible et facilite en conséquence le montage: c'est à cet endroit que la chaleur produite par la source de lumière 103 est la moins importante, et la partie inférieure de l'élément projecteur 101 est plus facile d'accès que, par exemple, la partie arrière.

L'assemblage entre l'élément projecteur et le module complémentaire tel qu'il vient d'être décrit comporte un certain nombre d'inconvénients :

Tout d'abord, le fait que les contreparties de connecteur 110 et 113 soient disposées verticalement sur la face arrière 109 de l'élément projecteur 101 pose un premier problème : en effet, le moule qui sert à fabriquer l'élément projecteur 101 s'ouvre selon une direction horizontale, et la nécessité de pouvoir disposer des contreparties de connecteur verticales impose la présence de tiroirs dans le moule utilisé. Ce moule étant utilisé pour l'ensemble des éléments projecteurs, y compris ceux fonctionnant avec une source lumineuse de type halogène, ce désavantage, en plus d'être pénalisant en terme de complexité dans la réalisation du moule, augmente inutilement le coût de l'ensemble des éléments projecteurs.

La présence de deux connecteurs est également un problème en soi ; en effet, plus le nombre de connecteurs est important, plus le montage est délicat et long à réaliser. EP 0 854 315 décrit des montages de ce type.

Un troisième problème rencontré avec les dispositifs projecteurs de l'état de la technique lorsqu'ils sont associés avec un module complémentaire est qu'ils sont relativement encombrants, le module complémentaire 102 ayant une hauteur importante du fait de sa propre conception.

Un quatrième problème rencontré avec les dispositifs projecteurs de l'état de la technique lorsqu'ils sont associés avec un module complémentaire réside dans la complexité de l'opération de montage, notamment en raison des moyens de fixation utilisés: dans l'état de la technique décrit, on doit utiliser au moins deux vis pour solidariser l'élément projecteur 101 et le ballast 102. Plus le nombre de vis est limité, meilleure est la durée et la simplicité de montage. EP 1 136 749 et JP 2001 101908 décrivent des projecteurs, dand lesquels le ballast est monté à l'intérieur du boîtier de projecteur. Le ballast est inséré dans un logement en forme d'arceau ou de "U". JP 2001 101908 décrit un dispositif selon le préambule de la revendication 1 de la présente demande.

Le dispositif selon l'invention répond aux problèmes qui viennent d'être exposés. D'une façon générale, on propose dans l'invention un dispositif d'éclairage ou de signalisation associé avec un module complémentaire qui présente une grande facilité d'assemblage par rapport à ceux de l'état de la technique, et qui, dans des exemples particuliers de réalisation, supprime la nécessité de prévoir des tiroirs, pour placer les contreparties de connecteur, dans le moule de fabrication du dispositif d'éclairage ou de signalisation. Par ailleurs, on peut prévoir une disposition du module complémentaire qui permet de limiter l'augmentation du volume global du dispositif d'éclairage ou de signalisation, notamment dans le sens de la hauteur, tout en améliorant son étanchéité. Ensuite, on limite le nombre de moyens de fixation. Enfin, dans l'invention, on prévoit une organisation différente des liaisons électriques qui permet de n'utiliser désormais qu'une unique contrepartie de connecteur sur le dispositif d'éclairage ou de signalisation et un unique connecteur sur le module complémentaire.

A cet effet, dans l'invention, on propose un dispositif d'éclairage ou de signalisation dans lequel on prévoit de disposer au moins une glissière de guidage et un élément protubérant destiné à s'insérer dans la glissière de guidage et à coulisser dedans. Selon un exemple particulier de réalisation du dispositif, les glissières de guidage sont disposées sur le dispositif d'éclairage ou de signalisation et les éléments protubérants associés sur le module complémentaire, mais l'inverse peut être réalisé dans d'autres exemples de réalisation du dispositif selon l'invention. Le coulissement des éléments protubérants dans les glissières de guidage s'effectue jusqu'à ce que le module complémentaire atteigne une position de blocage correspondant à sa position d'assemblage sur l'élément projecteur. Dans différents exemples de réalisation, le connecteur et sa contre partie s'emboîtent au niveau de la position de blocage, l'emboîtement pouvant se faire automatiquement à la fin de la translation des éléments protubérants dans les glissières de guidage.

Dans un exemple particulier de réalisation du dispositif selon l'invention, on réalise un évidement sous le réflecteur et une organisation des différents éléments du dispositif tels que le module complémentaire ne dépasse plus ou dépasse un minimum hors de l'évidement, au moins dans le sens de la hauteur. On prévoit par ailleurs de réaliser la solidarisation du module complémentaire avec l'élément projecteur au moyen d'un élément unique de fixation, par exemple une vis disposée au niveau d'un plan de contact défini par une face avant du module complémentaire et une paroi latérale de l'évidement. Un connecteur unique et sa contrepartie sont également disposés sur ce plan de contact.

L'invention concerne donc essentiellement un dispositif d'éclairage ou de signalisation pour véhicule automobile, comportant notamment un élément émetteur de lumière comprenant notamment un réflecteur, une source lumineuse, et un boîtier définissant un ensemble de faces dont des faces latérales, inférieure et supérieure et comportant éventuellement au moins une ouverture aménagée dans au moins une desdites faces et munie d'un moyen d'obturation amovible, caractérisé en ce que le dispositif d'éclairage ou de signalisation est destiné à être associé à au moins un module complémentaire à l'aide d'au moins une paire d'éléments d'assemblage comprenant une glissière de guidage et un élément protubérant, l'élément protubérant étant susceptible de s'insérer au moins à une extrémité de la glissière de guidage à laquelle il est apparié, et de glisser dans cette glissière de guidage, chacun des éléments d'assemblage d'une paire d'éléments d'assemblage étant disposé soit sur l'élément projecteur soit sur le module complémentaire, les deux éléments d'assemblage d'une paire d'assemblage n'étant pas disposés ensemble sur l'élément émetteur de lumière ou sur le module complémentaire, le module complémentaire étant muni d'un connecteur électrique unique, et le dispositif d'éclairage ou de signalisation étant muni d'une unique contrepartie du connecteur du module complémentaire.

Le dispositif d'éclairage ou de signalisation selon l'invention peut en outre présenter une ou plusieurs des caractéristiques suivantes :
- il comporte deux paires d'éléments d'assemblage ;
- chaque glissière de guidage est disposée sur l'élément émetteur de lumière et chaque élément protubérant d'une paire d'éléments d'assemblage est disposé sur le module complémentaire ;
- le module complémentaire est associé au dispositif d'éclairage ou de signalisation sur l'une au moins des parois externes ou internes du boîtier de l'élément émetteur de lumière ou sur la paroi externe ou interne d'un moyen d'obturation amovible dudit boîtier ;
- le module complémentaire est un ballast de type HID ou un module comprenant au moins une carte électronique gérant au moins une fonction associée à l'élément projecteur ;
- le connecteur électrique du module complémentaire est situé sur une face latérale dudit module, qui est de forme approximativement parallélépipédique ;
- le module complémentaire est muni d'au moins un élément protubérant qui fait partie intégrante du boîtier dudit module.
- le module complémentaire est de forme approximativement parallélépipédique et il est muni de deux éléments protubérants faisant partie intégrante du boîtier dudit module et ayant forme de ressauts sur au moins une partie de deux bords opposés d'une même face du boîtier du module ;
- connecteur et contrepartie de connecteur sont configurés de façon à être en contact électrique, une fois l'appariement du(des) glissière(s) et du (des) élément(s) protubérant(s) achevée ;
- la contrepartie de connecteur et le connecteur s'emboîtent l'un dans l'autre lorsqu'au moins un élément protubérant d'une paire d'assemblage est en bout de course dans la glissière de guidage à laquelle il est associé ;
- le module complémentaire et l'élément émetteur de lumière sont solidarisés l'un à l'autre au moyen de moyen(s) de fixation, une fois la(les) glissière(s) apparié(e) à l'(les) éléments protubérants, lesdits moyen(s) de fixation étant choisi(s) parmi une unique vis, des moyens de clipsage du module complémentaire sur l'élément émetteur de lumière ou un ressort ;
- le connecteur et/ou la contrepartie du connecteur comportent ou sont associés à des moyens pour centrer le connecteur par rapport à la contrepartie de connecteur, par exemple des pions de guidage ou l'utilisation de deux glissières de guidage en vis-à -vis et chanfreinées ;
- le boîtier de l'élément émetteur de lumière comporte un évidement ménagé dans au moins une partie d'une face latérale arrière et dans au moins une partie de la face inférieure de l'élément émetteur de lumière, et en ce que l'élément émetteur de lumière comporte au moins une contrepartie de connecteur disposée dans une ouverture ménagée dans la face arrière de l'élément émetteur de lumière, au niveau de l'évidement, au moins une des contreparties de connecteur étant destinée à recevoir un connecteur disposé sur le module complémentaire du dispositif émetteur de lumière ;
- les glissières de guidage sont disposées sur des parois de l'élément émetteur de lumière qui définissent l'évidement ;
- le dispositif d'éclairage ou de signalisation comporte un premier joint, du type joint à lèvre, disposé dans l'évidement pour venir envelopper une extrémité de connexion du module complémentaire et rendre ainsi étanche le dispositif projecteur ;
- le dispositif d'éclairage ou de signalisation comporte un deuxième joint disposé dans l'évidement pour venir envelopper partiellement la contrepartie du connecteur et rendre ainsi étanche la jonction entre l'élément émetteur de lumière et le module complémentaire ;
- le dispositif d'éclairage ou de signalisation comporte un troisième joint disposé entre un drain thermique, constituant une partie inférieure du module complémentaire, et un capot du module complémentaire ;
- le dispositif d'éclairage ou de signalisation comporte une entrée d'alimentation unique pour recevoir un ensemble de signaux depuis l'extérieur du dispositif d'éclairage ou de signalisation, lesdits signaux étant transmis, via une première liaison conductrice, à la contrepartie du connecteur, une deuxième liaison conductrice interne à l'élément émetteur de lumière assurant la transmission de signaux entre la contrepartie du connecteur et un module haute tension associé à la source lumineuse, la première liaison conductrice étant de préférence un faisceau non blindé et la deuxième liaison conductrice étant de préférence un faisceau blindé ;

Un autre objet de l'invention est le procédé d'assemblage du module complémentaire au dispositif d'éclairage ou de signalisation par la ou les paires d'éléments d'assemblage selon l'une des revendications précédentes, caractérisé en ce qu'en assemblant le module au dispositif d'éclairage ou de signalisation on réalise simultanément leur connexion mécanique et électrique.

Un autre objet de l'invention est le module électronique pour dispositif d'éclairage ou de signalisation de véhicule automobile, de type ballast ou élément contenant au moins une carte électronique gérant au moins une fonction associée audit projecteur, **caractérisé en ce que** ledit module comprend un connecteur unique ;

Ledit module est de forme approximativement parallélépipédique et le connecteur unique est disposé sur une de ses faces latérales ;

Ledit module est de forme approximativement parallélépipédique et il est muni d'au moins un élément protubérant qui fait partie intégrante du boîtier dudit module, et notamment de deux éléments protubérants faisant partie intégrante du boîtier dudit module et ayant forme de ressauts sur au moins une partie de deux bords opposés d'une même face du boîtier du module ;

Un autre objet de l'invention est un véhicule automobile équipé d'un dispositif projecteur, comportant un module complémentaire, incluant une des caractéristiques qui viennent d'être mentionnées.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. En particulier, l'exemple illustré représente le cas où un élément projecteur et un module complémentaire sont assemblés au niveau d'une face inférieure de l'élément projecteur, au niveau d'un évidement ménagé à cet effet. Mais dans d'autres exemples de réalisation, cette association peut être effectuée au niveau des autres faces de l'élément projecteur, y compris à l'intérieur de l'élément projecteur, avec ou sans présence d'un évidement. Les figures montrent :
- à la figure 1, déjà décrite, une représentation d'une association entre un dispositif projecteur et un module complémentaire dans l'état de la technique ;
- à la figure 2, une représentation schématique d'une vue en coupe et de face d'une association entre un dispositif projecteur et un module complémentaire selon l'invention;
- à la figure 3, une représentation plus détaillée des différents éléments intervenant dans la solidarisation entre le dispositif projecteur et le module complémentaire ;
- à la figure 4, une représentation schématique d'une vue en coupe et de gauche d'une association entre un dispositif projecteur et un module complémentaire selon l'invention;
- à la figure 5, une représentation schématique en perspective d'une partie du dispositif selon l'invention.

Sur les différentes figures, les éléments qui sont communs à plusieurs figures auront conservé les mêmes références.

La figure 2 montre un dispositif 200 selon l'invention en section verticale, qui est composé notamment d'un élément projecteur 201 et d'un module complémentaire 202 de type ballast HID, qui peut notamment comporter une carte de contrôle électronique 216. Comme dans l'état de la technique, on trouve, dans l'élément projecteur 201, notamment un réflecteur 212 dans lequel on a placé une source lumineuse 203, de type lampe à décharge. La source lumineuse 203 produit un faisceau lumineux qui sort de l'élément projecteur 201 au niveau d'une surface de sortie qui constitue la partie avant de l'élément projecteur 201. La source lumineuse 203, qui repose sur un élément porte-lampe 204, est connectée à un module haute tension 205 servant à l'alimenter.

Un évidement 206 est ménagé dans au moins une partie d'une surface inférieure 207 et une partie 209 d'une surface arrière 208 de l'élément projecteur 201, les orientations de ces surfaces étant définies en considérant le dispositif projecteur dans une position de fonctionnement habituel sur un véhicule automobile, la surface de sortie du faisceau lumineux constituant la face avant de l'élément projecteur. L'évidement 206 est de forme sensiblement parallélépipédique dans l'exemple décrit, mais sa forme pourrait être différente dans d'autres modes de réalisation de l'invention. Dans le dispositif projecteur 200, on a cherché à limiter l'encombrement lié à l'ajout du module complémentaire de type ballast 202. Deux solutions sont proposées, chacune des deux solutions pouvant éventuellement être mise en oeuvre seule ou associée à l'autre solution selon différents modes de réalisation du dispositif projecteur 200.

La première solution consiste à disposer, par exemple par clipsage et avec un peu de jeu, une contrepartie 210 de connecteur sur la partie arrière 209 de l'élément projecteur 201 qui se situe au niveau de l'évidement 206. La jonction de la contre partie 210 avec un connecteur 211 du ballast 202 peut ainsi se faire selon un plan vertical, dit plan de contact ou plan de jonction, c'est à dire en déplaçant le ballast 202 selon une direction horizontale vers l'élément projecteur 201, et non plus une direction verticale comme c'était le cas dans l'exemple décrit à la figure 1. Ainsi, l'encombrement dans le sens de la hauteur, qui était auparavant du à la présence de la contrepartie de connecteur et au connecteur dans un plan de jonction horizontal, a disparu. Avec une telle disposition du connecteur 211 et de sa contrepartie 210, la hauteur globale d'un dispositif projecteur comportant un module complémentaire diminue avantageusement.

Une légère augmentation de la largeur du dispositif pourrait alors cependant être constatée. C'est pourquoi dans l'invention, on propose une deuxième solution, éventuellement complémentaire de la première solution, selon laquelle l'évidement 206 est légèrement prolongé horizontalement, c'est à dire qu'il avance un peu plus sous le réflecteur 212. En effet, s'il n'est pas possible d'augmenter la taille de l'évidement dans le sens de la hauteur, sous peine de trop approcher le réflecteur 212, rien n'empêche de le prolonger dans le sens de la longueur pour le rendre plus profond.

De plus, le fait de disposer désormais d'un connecteur 211 et de sa contrepartie 210 qui sont disposés horizontalement permet d'améliorer la jonction en terme d'étanchéité ; en effet, de l'eau formée par condensation au sein de l'élément projecteur 201 peut éventuellement s'infiltrer le long d'une jonction verticale, mais pas le long d'une jonction horizontale.

Par ailleurs, dans l'invention, on propose une organisation de différentes liaisons électriques conductrices qui permet de se limiter à la présence de l'unique connecteur 211 et de sa contrepartie 210. En effet, on prévoit une première liaison électrique 213, constituant un faisceau d'entrée, qui transporte, depuis l'extérieur du dispositif projecteur 200 jusqu'à la contrepartie 210 du connecteur 211, un ensemble de signaux d'alimentation et de contrôle. Cette première liaison électrique 213 entre dans l'élément projecteur 201 au niveau d'une ouverture 214 pour aller se connecter sur la contrepartie 210. Une dérivation au niveau de la contrepartie 210 permet d'obtenir une deuxième liaison électrique, sous la forme d'un faisceau de sortie blindé, qui permet d'alimenter la source lumineuse 203. On a donc un faisceau d'entrée et un faisceau de sortie qui sont assemblés au niveau d'un unique connecteur, le connecteur assurant ainsi l'association d'un faisceau blindé avec un faisceau non blindé.

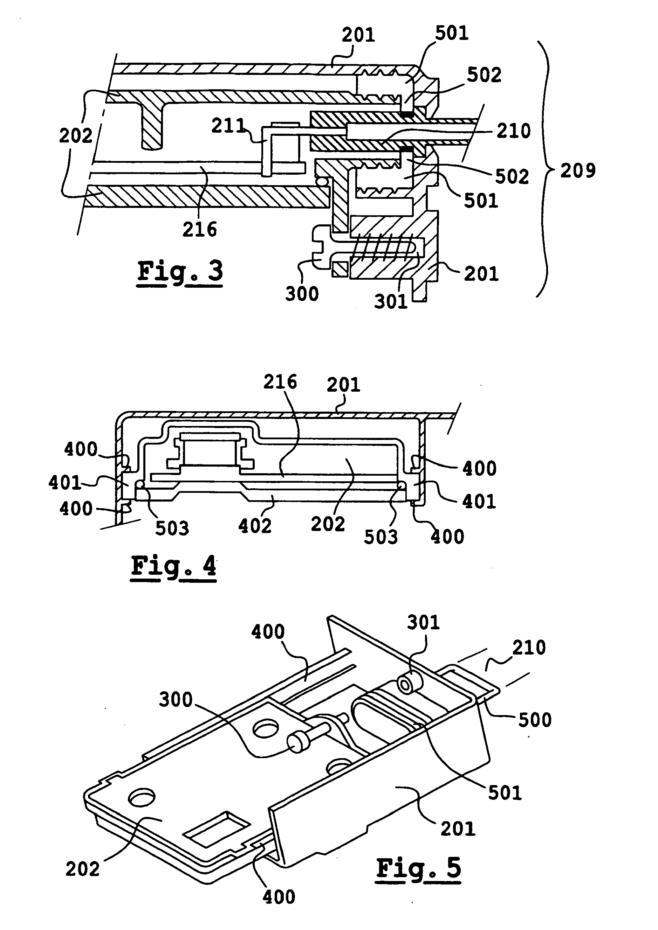

Il est à présent essentiellement fait référence aux figures 3, 4 et 5, qui permettent d'illustrer notamment les différents éléments intervenant dans la solidarisation entre le ballast 202 et l'élément projecteur 201.

A la figure 2, outre différents éléments déjà présents à la figure 1, on a représenté une vis 300, de préférence auto-taraudeuse, qui, après avoir été introduite dans un élément de fixation situé sur la partie inférieure du ballast 202, est insérée dans la partie 209 de la face arrière, au niveau de l'évidement 206, de l'élément projecteur 201 (représenté en traits hachurés) et la partie latérale du ballast 202 (représenté en grisé) servant de plan de jonction. La jonction constituée par la vis 300 et l'alésage fileté 301 est de préférence disposée de façon centrée en largeur, comme c'est visible sur la figure 5. Elle est disposée sous la liaison qui est établie entre le connecteur 211 et sa contrepartie 210.

Un dispositif d'auto-centrage du connecteur 211 sur sa contrepartie 210 est prévu : il apparaît à la figure 5 sous la forme de deux pions de centrage 500 disposés sur le contrepartie 210 ; ces pions de centrage sont destinés à orienter correctement le connecteur 211 et ses différentes liaisons électriques vers les orifices appropriés de la contrepartie 210 lorsque l'élément projecteur 201 et le ballast 202 s'emboîtent l'un dans l'autre. Dans d'autres exemples de réalisation, les pions de centrage peuvent être disposés sur le connecteur 211.

Dans un autre exemple de réalisation, la vis 300 pourrait être remplacée par un autre moyen mécanique de fixation, par exemple un ressort de poussée qui serait disposé derrière le ballast 202 et qui exercerait sur lui une poussée horizontale pour maintenir opérationnelle la liaison entre le connecteur 211 et sa contrepartie 210.

Selon l'invention, des rails de guidage 400, ou glissières, visibles aux figures 4 et 5, sont prévus sur l'élément projecteur 201 au niveau de l'évidement 206 . Ils sont destinés à guider, avec un minimum de jeu, le mouvement de translation horizontal du ballast 202 lorsqu'il est installé dans le dispositif 200, et ceci afin de faciliter le montage. Des décrochements 401, ou éléments protubérants, d'une taille adéquate pour rentrer dans les rails de guidage 400, sont prévus à cet effet sur les parois latérales du ballast 202. Les rails de guidage 400 jouent également un rôle de support du ballast 202 qui peut permettre l'utilisation d'une unique vis 300.

Selon les modes de réalisation du dispositif selon l'invention, on peut prévoir une ou plusieurs paires d'éléments d'assemblage, chaque paire étant constituée d'une glissière de guidage 400 et d'un élément protubérant 401. Les glissières de guidage peuvent être disposées sur l'élément projecteur 201 ou sur le module complémentaire 202, l'élément protubérant associé, c'est à dire appartenant à la même paire d'éléments d'assemblage, étant alors disposé sur l'élément ne supportant pas la glissière de guidage 400. Selon les différents exemples de réalisation envisagés pour le dispositif selon l'invention, les glissières de guidage 400 peuvent être disposées sur une face quelconque de l'élément projecteur 201 ou du module complémentaire 202, éventuellement au niveau de l'évidement 206 lorsqu'il existe.

Lorsqu'un élément protubérant 401 glisse le long d'une glissière de guidage 400, il atteint une position de blocage, par exemple par butée mécanique, qui correspond à la position finale du module complémentaire, c'est à dire à sa position de mise en service. Dans l'invention, on prévoit que lorsque le module complémentaire atteint sa position de blocage, le connecteur 211 entre dans sa contrepartie 210, c'est à dire que la butée mécanique et la connexion électrique s'effectuent au même moment. Afin que la connexion électrique s'effectue de façon satisfaisante, différents moyen de centrage peuvent être disposés de façon à ce qu'ils agissent également à ce moment.

Dans un exemple particulier de réalisation du dispositif selon l'invention, on dispose les glissières de guidage 400 à l'intérieur même de l'élément projecteur 201, le module complémentaire étant alors destiné à être contenu dans l'élément projecteur 201, ce qui présente un avantage en terme d'étanchéité du dispositif selon l'invention.

Dans un autre exemple, les glissières de guidage 400 se rétrécissent progressivement, de façon à freiner par frottement puis à stopper, au niveau de la position de blocage, la progression des éléments protubérants 401. Les éléments protubérants 401 peuvent ainsi être bloqués dans les glissières de guidage 400, pouvant ainsi assurer le maintien du module complémentaire 202 sur l'élément projecteur 201 sans utiliser de moyens de fixation supplémentaires.

Afin d'assurer une parfaite étanchéité du dispositif selon l'invention, différents joints peuvent être présents :

Un premier joint 501, du type joint à lèvre, visible aux figures 3 et 5, est disposé dans l'évidement 206 pour venir envelopper le ballast 202 au niveau de sa face avant, rendant ainsi étanche le dispositif projecteur 200 par rapport au monde extérieur. Le premier joint 501 peut se terminer par une membrane 502, visible à la figure 3, qui assure l'étanchéité entre le ballast 202 et l'élément projecteur 201. Cette membrane 502 pourrait prendre la forme d'un deuxième joint, dissocié du premier joint 501, qui empêcherait toute infiltration de liquide entre le ballast 202 et l'élément projecteur 201 au niveau de la fixation avec jeu de la contrepartie 210 sur l'élément projecteur 201.

Un troisième joint 503, visible sur la figure 4, assure l'étanchéité du ballast 202 vis à vis de l'extérieur ; il est disposé au niveau d'une jonction entre un drain thermique 402 constituant la face inférieure du ballast 202 et les décrochements 401 prévus sur les parois latérales du ballast 202. Le passage des fils conducteurs au niveau du connecteur 211 et de sa contrepartie 210 est également rendu étanche, par exemple au moyen d'un gel durcissant après son application.

A noter que pour garantir l'étanchéité du module, on peur utiliser un, deux, ou plus de deux joints, chaque joint pouvant remplir une ou plusieurs fonctions

En conclusion, l'invention a mis au point un système d'assemblage entre un module électronique et un dispositif d'éclairage ou de signalisation pour véhicule automobile qui est extrêmement avantageux :
- le montage mécanique par un système de glissière est très simple
- on peut assurer en une seule opération à la fois la connexion électrique et mécanique des deux pièces
- le module électronique peut n'avoir qu'un seul connecteur, il est plus simple à monter, à changer
- beaucoup de variantes existent

Ainsi, le module électronique peut être fixé au boîtier du dispositif à l'extérieur de celui-ci (ce qui implique un soin particulier pour garantir son étanchéité).

Avantageusement, on a donc des moyens d'assemblage des deux pièces qui comprennent les moyens avec glissière, et optionnellement
- des moyens de fixation des deux pièces l'une par rapport à l'autre une fois le montage par ce mouvement de glissement terminé,
- des moyens de centrage des deux pièces, qui peuvent être confondus ou additionnels avec les moyens avec glissière et les moyens de fixation précédemment mentionnés, et qui vont garantir que la connexion électrique (et mécanique) soit correctement établie.

Une autre caractéristique innovante d'un mode de réalisation de l'invention est que l'on peut avoir au niveau de la contrepartie de connecteur disposée dans le dispositif d'éclairage ou de signalisation le rassemblement de deux faisceaux , dont un blindé (le faisceau de sortie) et un non blindé (le faisceau d'entrée).

## Revendications

1. Dispositif d'éclairage ou de signalisation (200) pour véhicule automobile, comportant notamment un élément émetteur de lumière (201) comprenant notamment un réflecteur (212), une source lumineuse (203), et un boîtier définissant un ensemble de faces dont des faces latérales, inférieure et supérieure et comportant éventuellement au moins une ouverture aménagée dans au moins une desdites faces et munie d'un moyen d'obturation amovible, le dispositif d'éclairage ou de signalisation (200) étant associé à au moins un module complémentaire (202) à l'aide d'au moins une paire d'éléments d'assemblage comprenant une glissière de guidage (400) et un élément protubérant (401), l'élément protubérant (401) étant susceptible de s'insérer au moins à une extrémité de la glissière de guidage (400) à laquelle il est apparié, et de glisser dans cette glissière de guidage (400), chacun des éléments d'assemblage (400; 401) d'une paire d'éléments d'assemblage étant disposé soit sur l'élément projecteur (201) soit sur le module complémentaire (202), les deux éléments d'assemblage d'une paire d'assemblage n'étant pas disposés ensemble sur l'élément émetteur de lumière (201) ou sur le module complémentaire (202), le module complémentaire (202) étant muni d'un connecteur électrique (211) unique définissant une extrémité de connexion du module et le dispositif d'éclairage ou de signalisation (200) étant muni d'une unique contrepartie (210) du connecteur (211) du module complémentaire, le boîtier de l'élément émetteur de lumière (201) comportant un évidement (206) ménagé dans au moins une partie (208) d'une face latérale arrière (209) et dans au moins une partie de la face inférieure de l'élément émetteur de lumière (201), l'élément émetteur de lumière (201) comportant la contrepartie (210) de connecteur disposée dans une ouverture ménagée dans la face arrière de l'élément émetteur de lumière (201), au niveau de l'évidement (206), la contrepartie (210) de connecteur étant destinée à recevoir un connecteur (211) disposé sur le module complémentaire (202) du dispositif émetteur de lumière (201), ledit module complémentaire (202) étant associé au dispositif d'éclairage ou de signalisation sur l'une au moins des parois externes du boîtier de l'élément émetteur de lumière (201) ou sur la paroi externe d'un moyen d'obturation amovible dudit boîtier, **caractérisé en ce qu'**il comporte un premier joint (501), du type joint à lèvre disposé dans l'évidement (206) pour venir envelopper ladite extrémité de connexion du module complémentaire (202) et rendre ainsi étanche le dispositif d'éclairage ou de signalisation (200).

2. Dispositif d'éclairage ou de signalisation (200) selon la revendication précédente **caractérisé en ce qu'**il comporte deux paires d'éléments d'assemblage (400 ;401).

3. Dispositif d'éclairage ou de signalisation (200) selon l'une au moins des revendications précédentes **caractérisé en ce que** chaque glissière de guidage est disposée sur l'élément émetteur de lumière (201) et **en ce que** chaque élément protubérant (401) d'une paire d'éléments d'assemblage est disposé sur le module complémentaire (202).

4. Dispositif d'éclairage ou de signalisation (200) selon l'une des revendications précédentes **caractérisé en ce que** le module complémentaire (202) est un ballast de type HID ou un module comprenant au moins une carte électronique gérant au moins une fonction associée à l'élément projecteur (201).

5. Dispositif d'éclairage ou de signalisation (200) selon la revendication précédente, **caractérisé en ce que** le connecteur électrique (211) du module complémentaire (202) est situé sur une face latérale dudit module, qui est de forme approximativement parallélépipédique.

6. Dispositif d'éclairage ou de signalisation (200) selon l'une des revendications précédentes **caractérisé en ce que** le module complémentaire (202) est muni d'au moins un élément protubérant (401) qui fait partie intégrante du boîtier dudit module.

7. Dispositif d'éclairage ou de signalisation (200) selon l'une des revendications précédentes **caractérisé en ce que** le module complémentaire (202) est de forme approximativement parallélépipédique et **en ce qu'**il est muni de deux éléments protubérants (401) faisant partie intégrante du boîtier dudit module et ayant forme de ressauts sur au moins une partie de deux bords opposés d'une même face du boîtier du module.

8. Dispositif d'éclairage ou de signalisation (200) selon l'une des revendications précédentes **caractérisé en ce que** connecteur (211) et contrepartie de connecteur (210) sont configurés de façon à être en contact électrique, une fois l'appariement du(des) glissière(s) et du (des) élément(s) protubérant(s) achevée.

9. Dispositif d'éclairage ou de signalisation (200) selon l'une au moins des revendications précédentes **caractérisé en ce que** la contrepartie (210) de connecteur et le connecteur (211) s'emboîtent l'un dans l'autre lorsqu'au moins un élément protubérant (401) d'une paire d'assemblage est en bout de course dans la glissière de guidage (400) à laquelle il est associé.

10. Dispositif d'éclairage ou de signalisation (200) selon l'une au moins des revendications précédentes **caractérisé en ce que** le module complémentaire (202) et l'élément émetteur de lumière (201) sont solidarisés l'un à l'autre au moyen de moyen(s) de fixation, une fois la(les) glissière(s) apparié(e) à l'(les) éléments protubérants, lesdits moyen(s) de fixation étant choisi(s) parmi une unique vis (300), des moyens de clipsage du module complémentaire (202) sur l'élément émetteur de lumière (201) ou un ressort.

11. Dispositif d'éclairage ou de signalisation (200) selon la revendication 1 **caractérisé en ce que** le connecteur (211) et/ou la contrepartie (210) du connecteur comportent ou sont associés à des moyens pour centrer le connecteur (211) par rapport à la contrepartie (210) de connecteur, par exemple des pions de guidage (500) ou l'utilisation de deux glissières de guidage (400) en vis-à -vis et chanfreinées.

12. Dispositif d'éclairage ou de signalisation (200) selon l'une au moins des revendications précédentes **caractérisé en ce que** les glissières de guidage (400) sont disposées sur des parois de l'élément émetteur de lumière (201) qui définissent l'évidement (206).

13. Dispositif d'éclairage ou de signalisation (200) selon l'une au moins des revendications 11 à 12 **caractérisé en ce qu'**il comporte un deuxième joint (502) disposé dans l'évidement (206) pour venir envelopper partiellement la contrepartie (210) du connecteur (211) et rendre ainsi étanche la jonction entre l'élément émetteur de lumière (201) et le module complémentaire (202).

14. Dispositif d'éclairage ou de signalisation (200) selon l'une au moins des revendications précédentes **caractérisé en ce qu'**il comporte un troisième joint (503) disposé entre un drain thermique (402), constituant une partie inférieure du module complémentaire (202), et un capot du module complémentaire (202).

15. Dispositif d'éclairage ou de signalisation (200) selon l'une au moins des revendications précédentes **caractérisé en ce qu'**il comporte une entrée d'alimentation (214) unique pour recevoir un ensemble de signaux depuis l'extérieur du dispositif d'éclairage ou de signalisation (200), lesdits signaux étant transmis, via une première liaison conductrice (213), à la contrepartie (210) du connecteur (211), une deuxième liaison conductrice (215) interne à l'élément émetteur de lumière (201) assurant la transmission de signaux entre la contrepartie (210) du connecteur et un module haute tension (205) associé à la source lumineuse (203), la première liaison conductrice (213) étant de préférence un faisceau non blindé et la deuxième liaison conductrice (215) étant de préférence un faisceau blindé.

16. Procédé d'assemblage du module complémentaire (202) au dispositif d'éclairage ou de signalisation (200) par la ou les paires d'éléments d'assemblage selon l'une des revendications précédentes, **caractérisé en ce qu'**en assemblant le module au dispositif d'éclairage ou de signalisation (200) on réalise simultanément leur connexion mécanique et électrique.

17. Module électronique pour dispositif d'éclairage ou de signalisation (200) de véhicule automobile, de type ballast ou élément contenant au moins une carte électronique gérant au moins une fonction associée audit projecteur, **caractérisé en ce que** ledit module comprend un connecteur unique (211) et **en ce que** le module électronique est destiné à être associé au dispositif d'éclairage ou de signalisation (200) selon l'une au moins des revendications 1 à 15, ledit module électronique étant ledit module complémentaire (202).

18. Module selon la revendication 17 **caractérisé en ce que** ledit module est de forme approximativement parallélépipédique et **en ce que** le connecteur unique (211) est disposé sur une de ses faces latérales.

19. Module selon la revendication 17 ou la revendication 18 **caractérisé en ce que** ledit module est de forme approximativement parallélépipédique et **en ce qu'**il est muni d'au moins un élément protubérant (401) qui fait partie intégrante du boîtier dudit module, et notamment de deux éléments protubérants (401) faisant partie intégrante du boîtier dudit module et ayant forme de ressauts sur au moins une partie de deux bords opposés d'une même face du boîtier du module.

20. Véhicule automobile équipé d'un dispositif d'éclairage ou de signalisation (200) selon l'une au moins des revendications 1 à 15.

## Claims

1. Lighting or signalling device (200) for a motor vehicle, comprising in particular a light-emitter element (201) comprising in particular a reflector (212), a source of light (203), and a housing which defines a series of surfaces, including lateral, lower and upper surfaces, and optionally comprising at least one opening which is provided in at least one of the said surfaces, and is provided with a detachable closure means, the lighting or signalling device (200) being associated with at least one complementary module (202) by means of at least one pair of assembly elements, comprising a guiding slide (400) and a protruding element (401), the protruding element (401) being able to be inserted at least at one end of the guiding slide (400) with which it is paired, and to slide in this guiding slide (400), each of the assembly elements (400; 401) of a pair of assembly elements being disposed either on the headlight element (201) or on the complementary module (202), the two assembly elements of an assembly pair not being disposed together on the light-emitter element (201) or on the complementary module (202), the complementary module (202) being provided with a single electrical connector (211) which defines a connection end of the module, and the lighting or signalling device (200) being provided with a single counterpart (210) of the connector (211) of the complementary module, and the housing of the light-emitter element (201) comprising a recess (206) which is provided in at least part (208) of a rear lateral surface (209) and in at least part of the lower surface of the light-emitter element (201), the light-emitter element (201) comprising the connector counterpart (210) disposed in an opening which is provided in the rear surface of the light-emitter element (201) at the level of the recess (206), the connector counterpart (210) being designed to receive a connector (211) which is disposed on the complementary module (202) of the light-emitter device (201), the said complementary module (202) being associated with the lighting or signalling device on at least one of the outer walls of the housing of the light-emitter element (201) or on the outer wall of a detachable closure means of the said housing, **characterised in that** it comprises a first seal (501) of the lip seal type, disposed in the recess (206) in order to envelope the said connection end of the complementary module (202) and thus seal the lighting or signalling device (200).

2. Lighting or signalling device (200) according to the preceding claim, **characterised in that** it comprises two pairs of assembly elements (400; 401).

3. Lighting or signalling device (200) according to at least one of the preceding claims, **characterised in that** each guiding slide is disposed on the light-emitter element (201), and **in that** each protruding element (401) of a pair of assembly elements is disposed on the complementary module (202).

4. Lighting or signalling device (200) according to one of the preceding claims, **characterised in that** the complementary module (202) is a ballast of the HID type, or a module comprising at least one electronic board which generates at least one function associated with the headlight element (201).

5. Lighting or signalling device (200) according to the preceding claim, **characterised in that** the electrical connector (211) of the complementary module (202) is situated on a lateral surface of the said module, which has an approximately parallelepiped form.

6. Lighting or signalling device (200) according to one of the preceding claims, **characterised in that** complementary module (202) is provided with at least one protruding element (401) which forms an integral part of the housing of the said module.

7. Lighting or signalling device (200) according to one of the preceding claims, **characterised in that** the complementary module (202) has an approximately parallelepiped form, and **in that** it is provided with two protruding elements (401) which form an integral part of the housing of the said module, and is in the form of projections on at least part of two opposite edges of a single surface of the housing of the module.

8. Lighting or signalling device (200) according to one of the preceding claims, **characterised in that** the connector (211) and connector counterpart (210) are configured such as to be in electrical contact, once the pairing of the slide(s) and protruding element(s) has been completed.

9. Lighting or signalling device (200) according to at least one of the preceding claims, **characterised in that** the connector counterpart (210) and the connector (211) fit into one another when at least one protruding element (401) of an assembly pair is at the end of the course in the guiding slide (400) with which it is associated.

10. Lighting or signalling device (200) according to at least one of the preceding claims, **characterised in that** the complementary module (202) and the light-emitter element (201) are rendered integral with one another by means of securing means, once the slide(s) have been matched with the protruding element(s), the said securing means being selected from amongst a single screw (300), means for clipping the complementary module (202) onto the light-emitter element (201), or a spring.

11. Lighting or signalling device (200) according to claim 1, **characterised in that** the connector (211) and/or the connector counterpart (210) comprise, or are associated with, means for centring the connector (211) relative to the connector counterpart (210), for example guiding pins (500), or the use of two guiding slides (400) which are opposite one another and chamfered.

12. Lighting or signalling device (200) according to at least one of the preceding claims, **characterised in that** the guiding slides (400) are disposed on walls of the light-emitter element (201) which define the recess (206).

13. Lighting or signalling device (200) according to at least one of claims 11 or 12, **characterised in that** it comprises a second seal (502) which is disposed in the recess (206), in order to envelope the connector (211) counterpart (210) partially, and thus seal the join between the light-emitter element (201) and the complementary module (202).

14. Lighting or signalling device (200) according to at least one of the preceding claims, **characterised in that** it comprises a third seal (503) which is disposed between a thermal drain (402), constituting a lower part of the complementary module (202), and a cover of the complementary module (202).

15. Lighting or signalling device (200) according to at least one of the preceding claims, **characterised in that** it comprises a single supply input (214) to receive a series of signals from the exterior of the lighting or signalling device (200), the said signals being transmitted, via a first conductive connection (213), to the connector (211) counterpart (210), with a second conductive connection (215) inside the light-emitter element (201) assuring the transmission of signals between the connector counterpart (210) and a high-voltage module (205) which is associated with the source of light (203), the first conductive connection (213) preferably being a non-shielded beam and the second conductive connection (215) preferably being a shielded beam.

16. Method for assembly of the complementary module (202) to the lighting or signalling device (200) by the pair(s) of assembly elements according to one of the preceding claims, **characterised in that** by assembling the module to the lighting or signalling device (200), their mechanical and electrical connection is created simultaneously.

17. Electronic module for a motor vehicle lighting or signalling device (200), of the ballast type, or element containing at least one electronic board which controls at least one function associated with the said headlight, **characterised in that** the said module comprises a single connector (211), and **in that** the electronic module is designed to be associated with the lighting or signalling device (200) according to at least one of claims 1 to 15, the said electronic module being the said complementary module (202).

18. Module according to claim 17, **characterised in that** the said module has an approximately parallelepiped form, and **in that** the single connector (211) is disposed on one of its lateral surfaces.

19. Module according to claim 17 or claim 18, **characterised in that** the said module has an approximately parallelepiped form, and **in that** it is provided with at least one protruding element (401) which forms an integral part of the housing of the said module, and in particular it is provided with two protruding elements (401) which form an integral part of the housing of the said module, and are in the form of projections on at least part of two opposite edges of a single surface of the housing of the module.

20. Motor vehicle, equipped with a lighting or signalling device (200) according to at least one of claims 1 to 15.

## Patentansprüche

1. Kraftfahrzeugbeleuchtungs- oder Signalgebungsvorrichtung (200), mit insbesondere einem lichtemittierenden Element (201), das insbesondere einen Reflektor (212), eine Lichtquelle (203) und ein Gehäuse aufweist, das eine Reihe von Seiten bildet, darunter Seitenflächen, eine Unter- und eine Oberseite, und das gegebenenfalls wenigstens eine Öffnung aufweist, die in wenigstens einer der Seiten ausgebildet und mit einem abnehmbaren Verschlussmittel versehen ist, wobei die Beleuchtungs- oder Signalgebungsvorrichtung (200) wenigstens einem Zusatzmodul (202) mit Hilfe wenigstens eines Montage-Elementepaares zugeordnet ist, das eine Führungsschiene (400) und ein hervorstehendes Element (401) umfasst, wobei das hervorstehende Element (401) sich wenigstens in ein Ende der Führungsschiene (400), dem es paarig zugeordnet ist, einzufügen und in dieser Führungsschiene (400) zu gleiten vermag, wobei jedes Montage-Element (400; 401) eines Montage-Elementepaares entweder auf dem Scheinwerferelement (201) oder auf dem Zusatzmodul (202) angeordnet ist, wobei die beiden Montage-Elemente eines Montagepaares nicht gemeinsam auf dem lichtemittierenden Element (201) oder dem Zusatzmodul (202) angeordnet sind, wobei das Zusatzmodul (202) mit einem einzigen elektrischen Verbinder (211) versehen ist, der ein Verbindungsende des Moduls bildet, und wobei die Beleuchtungs- oder Signalgebungsvorrichtung (200) mit einem einzigen Gegenstück (210) des Verbinders (211) des Zusatzmoduls versehen ist, wobei das Gehäuse des lichtemittierenden Elements (201) eine Aussparung (206) aufweist, die in wenigstens einem Teil (208) einer hinteren Seitenfläche (209) und in wenigstens einem Teil der Unterseite des lichtemittierenden Elements (201) ausgebildet ist, wobei das lichtemittierende Element (201) das Verbindergegenstück (210) aufweist, das in einer Öffnung angeordnet ist, die in der Rückseite des lichtemittierenden Elements (201) in Höhe der Aussparung (206) ausgebildet ist, wobei das Verbindergegenstück (210) zur Aufnahme eines Verbinders (211) bestimmt ist, der auf dem Zusatzmodul (202) der lichtemittierenden Vorrichtung (201) angeordnet ist, wobei das Zusatzmodul (202) der Beleuchtungs- oder Signalgebungsvorrichtung auf wenigstens einer der Außenwände des Gehäuses des lichtemittierenden Elements (201) oder auf der Außenwand eines abnehmbaren Verschlussmittels des Gehäuses zugeordnet ist,
**dadurch gekennzeichnet, dass** sie eine erste Dichtung (501) vom Typ Lippendichtung umfasst, die in der Aussparung (206) angeordnet ist, um das Verbindungsende des Zusatzmoduls (202) zu umgeben und so die Beleuchtungs- oder Signalgebungsvorrichtung (200) abzudichten.

2. Beleuchtungs- oder Signalgebungsvorrichtung (200) nach dem vorhergehenden Anspruch,
**dadurch gekennzeichnet, dass** sie zwei Montage-Elementepaare (400; 401) umfasst.

3. Beleuchtungs- oder Signalgebungsvorrichtung (200) nach wenigstens einem der vorhergehenden Ansprüche,
**dadurch gekennzeichnet, dass** jede Führungsschiene auf dem lichtemittierenden Element (201) angeordnet ist, und dass jedes hervorstehende Element (401) eines Montage-Elementepaares auf dem Zusatzmodul (202) angeordnet ist.

4. Beleuchtungs- oder Signalgebungsvorrichtung (200) nach einem der vorhergehenden Ansprüche,
**dadurch gekennzeichnet, dass** das Zusatzmodul (202) ein Vorschaltgerät vom Typ HID oder ein Modul mit wenigstens einer elektronischen Platine ist, die wenigstens eine dem Scheinwerferelement (201) zugeordnete Funktion steuert.

5. Beleuchtungs- oder Signalgebungsvorrichtung (200) nach dem vorhergehenden Anspruch,
**dadurch gekennzeichnet, dass** sich der elektrische Verbinder (211) des Zusatzmoduls (202) auf einer Seitenfläche des Moduls befindet, die ungefähr parallelepipedisch ist.

6. Beleuchtungs- oder Signalgebungsvorrichtung (200) nach einem der vorhergehenden Ansprüche,
**dadurch gekennzeichnet, dass** das Zusatzmodul (202) mit wenigstens einem hervorstehenden Element (401) versehen ist, das integraler Bestandteil des Gehäuses des Moduls ist.

7. Beleuchtungs- oder Signalgebungsvorrichtung (200) nach einem der vorhergehenden Ansprüche,
**dadurch gekennzeichnet, dass** das Zusatzmodul (202) eine ungefähr parallelepipedische Form hat, und dass es mit zwei hervorstehenden Elementen (401) versehen ist, die integraler Bestandteil des Gehäuses des Moduls sind und auf wenigstens einem Teil der beiden entgegengesetzten Ränder ein und derselben Seite des Modulgehäuses die Form von Vorsprüngen haben.

8. Beleuchtungs- oder Signalgebungsvorrichtung (200) nach einem der vorhergehenden Ansprüche,
**dadurch gekennzeichnet, dass** Verbinder (211) und Verbindergegenstück (210) so ausgebildet sind, dass sie miteinander in elektrischen Kontakt gelangen, sobald die paarige Zuordnung zwischen der (den) Gleitschiene(n) und dem (den) hervorstehenden Element(en) erfolgt ist.

9. Beleuchtungs- oder Signalgebungsvorrichtung (200) nach wenigstens einem der vorhergehenden Ansprüche,
**dadurch gekennzeichnet, dass** das Verbindergegenstück (210) und der Verbinder (211) sich ineinander fügen, wenn sich wenigstens ein hervorstehendes Element (401) eines Montagepaares in der Führungsschiene (400), der es zugeordnet ist, in seiner Endstellung befindet.

10. Beleuchtungs- oder Signalgebungsvorrichtung (200) nach wenigstens einem der vorhergehenden Ansprüche,
**dadurch gekennzeichnet, dass** das Zusatzmodul (202) und das lichtemittierende Element (201) durch Befestigungsmittel miteinander fest verbunden sind, sobald die Schiene(n) dem (den) hervorstehenden Element(en) paarig zugeordnet ist (sind), wobei das (die) Befestigungsmittel aus einer einzigen Schraube (300), Mitteln zum Festklipsen des Zusatzmoduls (202) auf dem lichtemittierenden Element (201) oder einer Feder ausgewählt ist (sind).

11. Beleuchtungs- oder Signalgebungsvorrichtung (200) nach Anspruch 1,
**dadurch gekennzeichnet, dass** der Verbinder (211) und/oder das Verbindergegenstück (210) Mittel zum Zentrieren des Verbinders (211) bezüglich des Verbindergegenstücks (210) umfassen oder diesen zugeordnet sind, zum Beispiel Führungsstifte (500) oder der Einsatz von zwei sich gegenüberliegenden, abgeschrägten Führungsschienen (400).

12. Beleuchtungs- oder Signalgebungsvorrichtung (200) nach wenigstens einem der vorhergehenden Ansprüche,
**dadurch gekennzeichnet, dass** die Führungsschienen (400) auf Wänden des lichtemittierenden Elements (201) angeordnet sind, welche die Aussparung (206) bilden.

13. Beleuchtungs- oder Signalgebungsvorrichtung (200) nach wenigstens einem der Ansprüche 11 bis 12,
**dadurch gekennzeichnet, dass** sie eine zweite Dichtung (502) umfasst, die in der Aussparung (206) angeordnet ist, um das Gegenstück (210) des Verbinders (211) teilweise zu umgeben und so die Verbindung zwischen dem lichtemittierenden Element (201) und dem Zusatzmodul (202) abzudichten.

14. Beleuchtungs- oder Signalgebungsvorrichtung (200) nach wenigstens einem der vorhergehenden Ansprüche,
**dadurch gekennzeichnet, dass** sie eine dritte Dichtung (503) umfasst, die zwischen einer Wärmesenke (402), die ein Unterteil des Zusatzmoduls (202) bildet, und einer Abdeckung des Zusatzmoduls (202) angeordnet ist.

15. Beleuchtungs- oder Signalgebungsvorrichtung (200) nach wenigstens einem der vorhergehenden Ansprüche,
**dadurch gekennzeichnet, dass** sie einen einzigen Speiseeingang (214) umfasst, um einen Satz von Signalen von außerhalb der Beleuchtungs- oder Signalgebungsvorrichtung (200) zu erhalten, wobei die Signale über eine erste Leitungsverbindung (213) an das Gegenstück (210) des Verbinders (211) übertragen werden, wobei eine zweite Leitungsverbindung (215) innen in dem lichtemittierenden Element (201) die Signalübertragung zwischen dem Verbindergegenstück (210) und einem der Lichtquelle (203) zugeordneten Hochspannungsmodul (205) gewährleistet, wobei die erste Leitungsverbindung (213) vorzugsweise ein nicht geschirmter Kabelbaum und die zweite Leitungsverbindung (215) vorzugsweise ein geschirmter Kabelbaum ist.

16. Verfahren zur Montage des Zusatzmoduls (202) an der Beleuchtungs- oder Signalgebungsvorrichtung (200) durch das oder die Montage-Elementepaare nach einem der vorhergehenden Ansprüche,
**dadurch gekennzeichnet, dass** durch die Montage des Moduls an der Beleuchtungs-oder Signalgebungsvorrichtung (200) gleichzeitig deren mechanische und elektrische Verbindung realisiert wird.

17. Elektronisches Modul für Kfz-Beleuchtungs- oder Signalgebungsvorrichtung (200) vom Typ Vorschaltgerät oder eines Elements, das wenigstens eine elektronische Platine enthält, die wenigstens eine dem Scheinwerfer zugeordnete Funktion steuert,
**dadurch gekennzeichnet, dass** das Modul einen einzigen Verbinder (211) umfasst, und dass das elektronische Modul dazu bestimmt ist, der Beleuchtungs- oder Signalgebungsvorrichtung (200) nach wenigstens einem der Ansprüche 1 bis 15 zugeordnet zu sein, wobei das elektronische Modul das Zusatzmodul (202) ist.

18. Modul nach Anspruch 17,
**dadurch gekennzeichnet, dass** das Modul eine ungefähr parallelepipedische Form hat, und dass der einzige Verbinder (211) auf einer der Seitenflächen angeordnet ist.

19. Modul nach Anspruch 17 oder Anspruch 18,
**dadurch gekennzeichnet, dass** das Modul eine ungefähr parallelepipedische Form hat, und dass es mit wenigstens einem hervorstehenden Element (401) versehen ist, das zu dem Gehäuse des Moduls gehört, und insbesondere mit zwei hervorstehenden Elementen (401), die zu dem Gehäuse des Moduls gehören und auf wenigstens einem Teil der beiden entgegengesetzten Ränder ein und derselben Seite des Modulgehäuses die Form von Vorsprüngen haben.

20. Kraftfahrzeug, ausgestattet mit einer Beleuchtungs- oder Signalgebungsvorrichtung (200) nach wenigstens einem der Ansprüche 1 bis 15.
